(19) Europäisches Patentamt
European Patent Office
Office européen des brevets

(11) Numéro de publication : **0 188 138 B1**

(12) # FASCICULE DE BREVET EUROPÉEN

(45) Date de publication du fascicule du brevet : **30.08.89**

(51) Int. Cl.[4] : **H 01 S 3/03**, B 01 J 23/84, B 01 J 29/16

(21) Numéro de dépôt : **85402263.9**

(22) Date de dépôt : **21.11.85**

(54) **Générateur laser à catalyseur pour le gaz laser.**

(30) Priorité : **23.11.84 FR 8417886**

(43) Date de publication de la demande : **23.07.86 Bulletin 86/30**

(45) Mention de la délivrance du brevet : **30.08.89 Bulletin 89/35**

(84) Etats contractants désignés : **DE GB**

(56) Documents cités :
**EP-A- 0 081 081**
**FR-A- 1 407 839**
**FR-A- 1 555 970**
**CHEMICAL ABSTRACTS, vol. 78, page 255, no. 19907h, Columbus, Ohio, US & JP - A - 72 11 723**

(73) Titulaire : **SAT Société Anonyme de Télécommunications**
**41, rue Cantagrel**
**F-75631 Paris Cedex 13 (FR)**

(72) Inventeur : **Chartier, Marc Etienne Pierre**
**41 rue Cantagrel**
**F-75631 Paris Cédex 13 (FR)**

(74) Mandataire : **Bloch, Robert et al**
**2, square de l'Avenue du Bois**
**F-75116 Paris (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue St-Denis, 75001 Paris, France

EP 0 188 138 B1

## Description

La présente invention concerne un générateur laser comprenant une cavité résonante remplie d'un gaz laser à base de $CO_2$ et des électrodes de pompage électrique pour provoquer une décharge laser dans le gaz de la cavité alors soumise à une élévation de température.

Un tel générateur est utilisé par exemple dans les domaines médicaux ou militaires.

Les générateurs de ce type présentent un inconvénient majeur qui limite leur durée de vie, à savoir la dégradation du gaz.

La dégradation du gaz, généralement du $CO_2$, se traduit par les réactions chimiques suivantes, directement provoquées par la décharge haute tension :

$$CO_2 \rightarrow CO + O$$

$$CO \rightarrow C + O$$

On peut empêcher cette dégradation du gaz par des catalyseurs solides disposés dans la cavité, et qui favorisent les réactions chimiques inverses

$$C + O \rightarrow CO$$

$$CO + O \rightarrow CO_2$$

Mais les catalyseurs solides connus à ce jour, comme par exemple l'hopcalite, sont pulvérulents ; malgré des précautions d'emploi très strictes, ils polluent donc le laser.

On peut encore empêcher la dégradation du gaz en adoptant une cathode active, pourvue d'un certain pouvoir catalytique et oxydant, réalisée à partir d'un mélange approprié de métaux et d'oxydes, comme par exemple du cuivre, du nickel, du cobalt. Si une telle électrode empêche effectivement la dégradation du gaz, elle provoque par contre une importante pollution de la cavité résonnante, par dépôt de métaux et d'oxydes sur sa paroi interne, provoquant ainsi une autre forme de dégradation du laser.

En définitive, et même avec les catalyseurs solides connus ou une électrode active, la durée de vie du générateur et son bon fonctionnement restent limités.

La demanderesse s'est donc posé le problème de la dégradation du gaz laser et de la pollution de la cavité.

On connaît donc déjà, comme moyen de catalyse parfaitement approprié pour la réaction

$$CO \rightarrow CO_2$$

le produit désigné sous le nom d'hopcalite. C'est un mélange d'oxydes de manganèse et de cuivre. L'oxyde de manganèse assure un rôle d'oxydation, et l'oxyde de cuivre, un rôle de catalyse.

Pour que l'action catalytique puisse être assurée, ce matériau doit présenter une structure particulière, en l'occurence une structure en éponge.

L'hopcalite est donc un matériau friable, générateur de poussières préjudiciables au bon fonctionnement du laser.

De toutes façons, des grains d'hopcalite agglomérés et collés sur un support, à l'intérieur de la cavité laser, ne produisent pas d'effet de catalyse. Quant à la solution de disposer des grains d'hopcalite à l'intérieur d'un filtre, elle présente l'inconvénient selon lequel le filtre constitue pour les gaz un obstacle difficile à franchir.

Il existe également et par ailleurs des tamis moléculaires à structure microporeuse, connus sous le nom de zéolithes. Il s'agit d'alumino-silicates naturels ou artificiels. On les utilisait jusqu'ici comme agents de vide, grâce à leur caractéristique de retenir, dans leurs micropores, de très grandes quantités de gaz, et notamment de gaz lourds, comme précisément le gaz carbonique $CO_2$.

Après s'être penchée sur les raisons de cette qualité des zéolithes, la demanderesse a eu l'idée de les utiliser dans les générateurs laser comme supports de catalyseurs du type hopcalite, malgré le fait que leur propriété de retenir les gaz ait jusqu'ici été considérée comme un inconvénient pour les lasers.

Le document EP-A-0 081 081 enseigne bien, pour un générateur laser, et outre de disposer un support de catalyseur dans la cavité, avec les inconvénients rappelés ci-dessus, de disposer dans une chambre séparée de la cavité laser elle-même, une couche support de catalyseur. Mais cette couche support s'étend relativement loin de la cavité laser, si bien qu'il est nécessaire de disposer de moyens de chauffage du catalyseur, ce qui est un inconvénient.

La présente invention concerne donc un générateur laser du type mentionné ci-dessus, dans lequel le catalyseur contient du bioxyde de manganèse directement formé sur un support zéolithique disposé dans une partie du générateur communiquant avec la cavité, tel qu'enseigné par EP-A-0 081 081, caractérisé par le fait que le support zéolithique est disposé dans une partie chaude du générateur communiquant, d'un côté, avec la cavité et, de l'autre côté, avec une réserve de gaz laser.

Le catalyseur du générateur de l'invention est pourvu d'une grande cohésion, et grâce à cela, il peut être disposé au plus prêt de la cavité laser, même entre cette cavité et la réserve de gaz, ce qui évite d'avoir à le chauffer.

Le support zéolithique retient le produit de la réaction permanente de catalyse, en l'espèce $CO_2$ si le milieu actif du laser est constitué par un mélange comprenant du gaz carbonique, pour d'ailleurs le libérer sous l'action de la chaleur. En fait, l'absorption et la libération du gaz carbonique interviennent concomitamment et en permanence pendant le fonctionnement du générateur. C'est par capillarité que le gaz est retenu dans les micropores du support zéolithique et lorsque la température s'élève, cette capillarité gazeuse diminue en raison de l'augmentation de la fluidité du gaz, ce qui provoque sa libération. Le support du catalyseur de l'invention agit donc comme un réservoir de gaz qui se remplit sous l'action de l'augmentation de la pression de gaz dans la cavité laser, et celle de l'effet laser et de la réaction de catalyse, et qui se vide dans la cavité laser sous l'action de la chaleur. Cette libération de gaz, qui augmente le gain du laser, vient compenser la perte de gain due à l'élévation de température.

Ce qui est remarquable dans l'exploitation du support zéolithique de l'invention, c'est qu'on lui fait jouer un rôle inverse de celui qu'on lui a fait jouer jusqu'ici, alors qu'il n'était utilisé que pour se remplir et non pour se vider.

L'invention sera mieux comprise à l'aide de la description suivante de la forme de réalisation préférée du générateur de l'invention, en référence à la figure unique ci-annexée, qui représente une vue en coupe schématique du générateur.

Le générateur laser représenté sur la figure comporte une enveloppe extérieure 1 ménageant, à l'intérieur un conduit 2, qui, associé à deux miroirs 4 et 5, forme une cavité résonante 3.

Cette cavité est remplie d'un milieu gazeux qui, en l'espèce, est constitué par du gaz carbonique $CO_2$, en fait mélangé à d'autres gaz, par exemple CO, de l'azote, de l'hélium.

Le générateur utilise le pompage électrique et comporte donc, non représentées, une source d'alimentation et deux électrodes. Il peut s'agir d'électrodes plongeant dans le conduit 2, à proximité des deux miroirs 4, 5 et entre lesquelles se crée une décharge électrique, ou d'électrodes filiforme, pour l'une, et en forme de bande, pour l'autre, s'étendant sur la longueur et de part et d'autre du capillaire, respectivement. Le pompage électrique s'effectue avantageusement à haute tension continue, mais pourrait aussi s'effectuer à fréquence radio.

On notera que l'invention s'applique en fait à un générateur à conduit quelconque, à capillaire ou non. Au plan général, l'invention s'applique à un générateur à cavité matériellement définie et chauffante.

L'enveloppe 1 est conformée pour ménager une extension 6, ici en forme de manchon cylindrique d'axe perpendiculaire à celui de la cavité résonante 3, qui, en fonctionnement, constitue également une partie chaude du générateur.

Le manchon 6 est raccordé au reste de l'enveloppe 1 par un épaulement annulaire 7, servant d'appui pour une cartouche catalytique 8.

Par l'intermédiaire du manchon 6, servant donc de logement de réception de la cartouche 8, la cavité 3 communique avec une réserve du milieu gazeux 9, à l'intérieur d'une enceinte 10 raccordée au manchon 6 par un épaulement annulaire 11, avec interposition d'un joint d'indium 12, et à l'aide de moyens de serrage conventionnels, non représentés.

La cartouche catalytique 8 comporte une enveloppe ajourée, ou — grillagée, 13 servant de filtre mécanique et contenant des granules de zéolithe 14 sur lesquelles a été fixé au préalable un catalyseur, de la manière décrite ci-dessous.

A partir d'une zéolithe du commerce, et celle-ci étant très avide d'eau, on la chauffe pour la sécher. On la trempe ensuite dans un premier bain obtenu par dissolution de permanganate de potassium dans de l'eau, et on la sèche à nouveau. On la trempe après dans un deuxième bain obtenu par dissolution de sulfate de cuivre dans de l'eau, et on la sèche encore.

Les granules de zéolithe sont enfin placées dans une ambiance de vapeur d'acétone, qui décompose le permanganate de potassium et le sulfate de cuivre, pour former du bioxyde de manganèse et de l'oxyde de cuivre devant assurer la fonction d'oxydation et la fonction de catalyse, respectivement.

On procède ensuite à un rinçage. Avant emploi, le catalyseur ainsi obtenu devra être activé par chauffage à environ 200 °C dans un courant d'air sec.

On notera ici qu'on peut substituer au cuivre (hopcalite) de l'argent ou du cobalt, par exemple, et que, même, plusieurs de ces métaux pourraient être associés pour assurer la fonction de catalyse.

Au plan fonctionnel, le catalyseur transforme l'oxyde de carbone produit par l'effet laser en gaz carbonique $CO_2$, et les micropores des granules de zéolithe retiennent ce gaz carbonique pour le libérer sous l'action de la chaleur.

En régime de fonctionnement du laser, les étapes suivantes se déroulent :

— sous l'action de l'effet laser, la cavité chauffe et le $CO_2$ est transformé en CO ;

— le catalyseur incorporé dans les granules de zéolithe transforme le CO en $CO_2$ qui est retenu dans les granules ;

— les granules de zéolithe, sous l'action de la chaleur, libèrent le $CO_2$ et la pression de $CO_2$ dans la cavité augmente.

On notera que le maintien de la pression de $CO_2$ dans la cavité à un niveau élevé résulte de l'action catalytique. En l'absence de catalyseur, il se créerait un équilibre naturel $CO/CO_2$, avec une proportion de

$CO_2$ non appropriée et en tous cas plus faible qu'en présence du catalyseur.

Les avantages de l'invention décrite ci-dessus sont nombreux.

Elle met en œuvre un catalyseur propre, du fait de la structure mécaniquement plus solide du support utilisé.

Dans le cas d'un laser à $CO_2$, celui qui a donc été considéré ci-dessus, l'action de catalyse se double d'une action d'absorption-désorption, due, d'une part, à la sélectivité de l'absorption de la zéolithe, prépondérante pour le $CO_2$, et d'autre part, à la diminution de l'effet de capillarité sur la zéolithe à température élevée.

Comme le gain d'un laser chute avec la température, la désorption de $CO_2$ à chaud stabilise sa puissance de sortie et assure un bon fonctionnement à chaud, tout en en prolongeant la durée de vie. Bien entendu, l'équilibre du gain dépendra de la microporosité de la zéolithe et de la quantité du matériau catalyseur incorporé dans la zéolithe, qui devront donc être expérimentalement mais facilement déterminées en conséquence.

Enfin, il résulte de l'utilisation d'une zéolithe comme support de catalyseur, que le dispositif de refroidissement du laser, normalement indispensable, n'a plus ici de raison d'être.

## Revendications

1. Générateur laser comprenant une cavité résonante (3) remplie d'un gaz laser à base de $CO_2$, des électrodes de pompage électrique pour provoquer une décharge laser dans le gaz de la cavité alors soumise à une élévation de température, et un catalyseur, pour empêcher la dégradation du gaz, qui contient du bioxyde de manganèse directement formé sur un support zéolithique (14) disposé dans une partie du générateur communiquant avec la cavité (3), caractérisé par le fait que le support zéolithique est disposé dans une partie chaude (6) du générateur communiquant, d'un côté, avec la cavité (3) et, de l'autre côté, avec une réserve de gaz laser (9).

2. Générateur laser selon la revendication 1, dans lequel la cavité (3) est ménagée à l'intérieur d'une enveloppe (1), ladite partie chaude (6) formant une extension de cette enveloppe (1) et recevant une cartouche catalytique (8).

3. Générateur laser selon la revendication 2, dans lequel ladite cartouche (8) comporte un filtre-enveloppe (13) contenant des granules de zéolithe (14) sur lesquelles un catalyseur a été préalablement fixé.

4. Générateur laser selon l'une des revendications 1 à 3, dans lequel le catalyseur contient au moins l'un des oxydes de cuivre, d'argent, de cobalt.

## Claims

1. Laser generator comprising a resonant cavity (3) filled with a laser gas based on $CO_2$, electric pumping electrodes for causing a laser discharge in the gas of the cavity then subjected to a temperature rise, and a catalyst, for preventing degradation of the gas, which contains manganese dioxide formed directly on a zeolitic support (14) disposed in a part of the generator communicating with the cavity (3), characterized in that the zeolitic support is disposed in a hot part (6) of the generator communicating, on the one hand, with the cavity (3) and, on the other, with a laser gas reserve (9).

2. Laser generator according to claim 1, wherein the cavity (3) is formed inside a housing (1), said hot part (6) forming an extension of said housing (1) and receiving a catalytic cartridge (8).

3. Laser generator according to claim 2, wherein said cartridge (8) comprises a filter-case (13) containing granules of zeolite (14) on which a catalyst has been previously fixed.

4. Laser generator according to one of claims 1 to 3, wherein the catalyst contains at least one of the copper, silver, cobalt oxides.

## Patentansprüche

1. Lasergenerator mit einem Resonanzhohlraum (3), der mit einem Lasergas auf $CO_2$-Basis gefüllt ist, Elektroden zum elektrischen Pumpen, um eine Laserentladung in dem Gas des Hohlraums einzuleiten, der darauf einer Temperaturerhöhung unterworfen wird, und einem Katalysator, zum Verhindern des Abbaus des Gases, der Mangandioxid enthält, das unmittelbar auf einem zeolithischen Träger (14) gebildet ist, der auf einem Teil des Generators angeordnet ist, der mit dem Hohlraum (3) in Verbindung steht, dadurch gekennzeichnet, daß der zeolithische Träger in einem warmen Teil (6) des Generators angeordnet ist, der einerseits mit dem Hohlraum (3) und andererseits mit einem Vorrat des Lasergases (9) in Verbindung steht.

2. Lasergenerator nach Anspruch 1, bei welchem der Hohlraum (3) im Innern eines Gehäuses (1) angelegt ist, wobei der warme Teil (6) eine Verlängerung dieses Gehäuses (1) bildet und eine Katalysatorpatrone (8) aufnimmt.

3. Lasergenerator nach Anspruch 2, bei welchem die Patrone (8) ein Filtergehäuse (13) aufweist, das Zeolithgranüle (14) enthält, auf denen ein Katalysator zuvor befestigt wurde.

4. Lasergenerator nach einem der Ansprüche 1 bis 3, bei welchem der Katalysator wenigstens eines der Oxyde von Kupfer, Silber, Kobalt enthält.

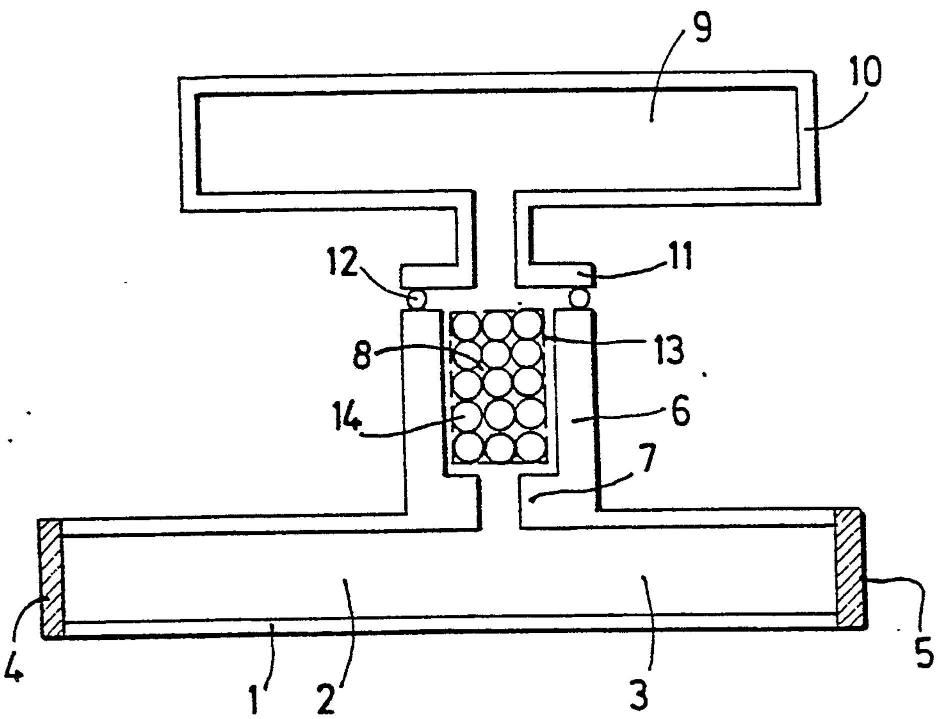
9
10
12
11
8
13
14
6
7
4
1
2
3
5